(19) Europäisches Patentamt
European Patent Office
Office européen des brevets

(11) **EP 4 257 925 A1**

(12) **EUROPEAN PATENT APPLICATION**

(43) Date of publication:
**11.10.2023 Bulletin 2023/41**

(21) Application number: **22315077.2**

(22) Date of filing: **04.04.2022**

(51) International Patent Classification (IPC):
**G01C 19/5712** $^{(2012.01)}$ **G01C 19/5747** $^{(2012.01)}$

(52) Cooperative Patent Classification (CPC):
**G01C 19/5712; G01C 19/5747**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Commissariat à l'Energie Atomique et aux Energies Alternatives 75015 Paris (FR)**

• **Politecnico di Milano 20133 Milano (IT)**

(72) Inventors:
• **Joet, Loïc 38054 Grenoble cedex 09 (FR)**
• **Langfelder, Giacomo 20129 Milano (IT)**
• **Gadola, Marco 28047 Oleggio (IT)**

(74) Representative: **Decobert, Jean-Pascal Hautier IP 20, rue de la Liberté 06000 Nice (FR)**

(54) **GYROSCOPE WITH ENHANCED SENSITIVITY**

(57) The invention relates to an inertial sensor comprising a substrate extending along a rotation direction and a drive excitation direction, a first and a second drive frames, an excitation device, a first and a second proof mass hingedly connected to the first and second drive frames along a first and a second connection axis respectively, a lever pivotably mounted around a fulcrum axis, strain gauges mechanically stressed by the lever when said lever is rotating around the fulcrum axis, wherein the first proof mass is rotationally connected to the lever along a first coupling axis, the second proof mass is rotationally connected to the lever along a second coupling axis, the first connection axis is further away from the fulcrum axis than the first coupling axis, the second connection axis is further away from the fulcrum axis than the second coupling axis.

FIG. 5

Processed by Luminess, 75001 PARIS (FR)

EP 4 257 925 A1

**Description**

TECHNICAL FIELD

The present invention relates to inertial sensors, particularly to angular displacement sensors that can be used to detect angular position, speed or acceleration, and more particularly to single axis pitch/roll miniaturized high performance gyroscopes.

PRIOR ART

Rotational movement detection is important in the automotive and aviation sectors as well as satellite navigation systems. Gyroscopes based on microelectromechanical systems can be miniaturized so as to be integrated in smartphones and smart devices.

Such gyroscopes monitor the motion of proof masses fixed to drive frames and to which a periodical vibration has been applied along an excitation direction also called drive excitation direction. This periodical vibration is referred as the drive frame motion.

When the device is subjected to a rotational motion whose central axis is extending along a direction perpendicular to the drive frame motion direction, the proof masses are subjected to a Coriolis acceleration inducing movement along a direction perpendicular to both the direction along the rotation vector and the drive excitation direction .

This movement is a function of the rotational motion. Hence, by monitoring this movement, it is possible to determine the rotational movement.

Gyroscopes are typically referred as pitch, roll and/or yaw gyroscopes according to along which axis they are measuring the angular velocity. Yaw gyroscopes measure the angular velocity around a direction perpendicular to the device plane. Pitch and roll gyroscopes measure the angular velocity around in-plane directions.

Pitch or roll gyroscope usually have lower performances than yaw gyroscopes due to the inherently planar MEMS (standing for Microelectromechanical systems) (which include nano systems so called NEMS, which stands for Nanoelectromechanical systems) processes. Indeed, major problems arise.

First, out-of-plane springs are less efficient than their in-plane counterparts. Out-of-plane translating springs actually do not exist per se; they are mimicked by in-plane springs by taking advantage of the rotation. As a result, their performances aren't optimal.

Moreover, for most of gyroscopes that use capacitive detection, the horizontal surfaces facing the proof masses - which operate as a benchmark for pitch/roll detection - are smaller than the vertical ones - which operate as a benchmark for yaw detection. Vertical surfaces can also be interdigitated in order to improve a capacitive detection of the yaw motion, while horizontal surfaces can't.

One solution to obtain high-performance pitch or roll gyroscopes is to design yaw devices only and use three devices of this type in three directions normal to each other. However, this requires increased assembly costs and is not suitable for ultra-thin packages yet required for several applications. Additionally, the three devices therefore have to be assembled after fabrication, which prevents from achieving perfect axes alignment yet useful for several high-performance applications.

M&NEMS (Micro and Nanoelectromechanical systems) technologies propose to increase performances by replacing the capacitive detection by piezoresisitive detection. But the performances of the hinges between the proof masses and the drive frames are lower when detecting an out-of-plane motion than when detecting an in-plane motion. As a result, the compression on the gauges monitoring the proof masses displacement is smaller, leading to poorer detection.

Other solutions, mainly concerning M&NEMS technologies, to improve pitch/roll detection, are to use larger and thicker proof masses (i.e. increase the proof masses' mass) and to improve the design of the springs so as to increase the energy of the system and thereby enhance the signal. However, a particular feature of gyroscopes is that the proof masses' displacement is a function of the drive frame motion frequency, the sense frequency and the excitation amplitude only. Hence, increasing the energy doesn't directly improve the proof masses' displacement and thereby doesn't improve the stretching/compression of the gauges. So as to convert the additional energy into additional stretching/compression, increasing the energy must be accompanied by reducing the lever length.

However, both increasing the proof masses' energy and reducing the lever length come with technical limitations and/or disadvantages. For example, increasing the process height is not always feasible as it depends on the available process steps. Also, reducing the lever length is limited by rotational in-plane spurious modes arising in these configurations. These modes are detrimental for gyroscopes' performance in harsh environment. In this respect, performance in state-of-the-art architectures is limited by the fact that the lever length cannot be reduced under a certain minimal value.

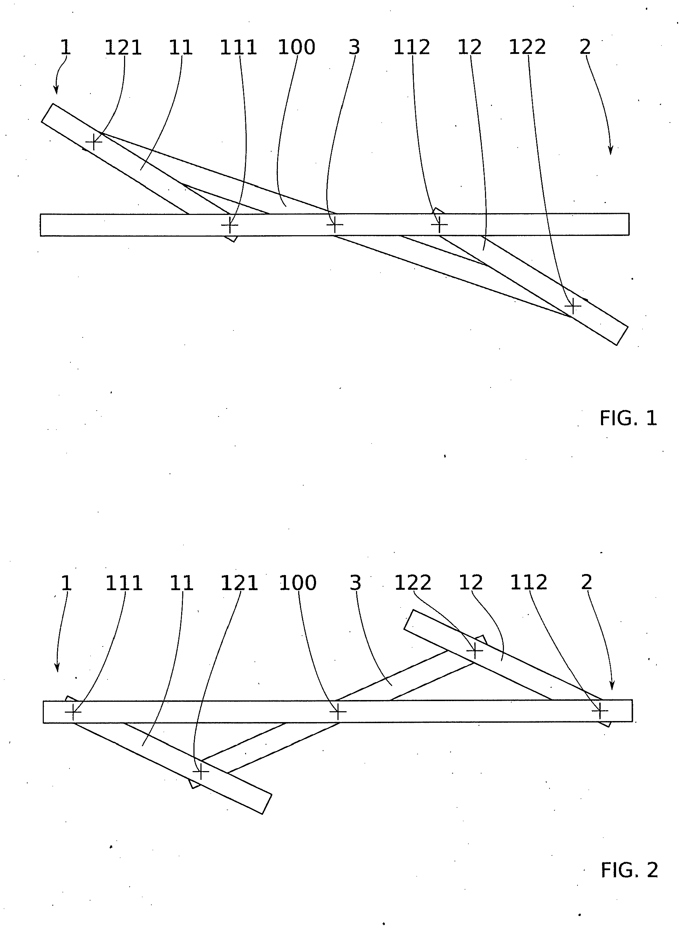

The publication "In-Plane and Out-of-Plane MEMS Gyroscopes Based on Piezoresistive NEMS Detection" (Stefano Dellea, Federico Giacci, Antonio Francesco Longoni, and Giacomo Langfelder JOURNAL OF MICROELECTROMECHANICAL SYSTEMS, VOL. 24, NO. 6, DECEMBER 2015) discloses a levered sense mode for M&NEMS piezoelectric sensing pitch/roll gyroscopes. The structure of the gyroscope according to this publication is very common: a lever rotates around a central axis and is connected at each end to a proof mass, each proof mass being connected at its other end to a drive frame. Intrinsically, the distance between the central axis and the connection axis between the lever and said proof mass is higher than the distance between the central axis and the connection axis between said proof mass and the drive frame, and the lever rotation angle is smaller than mass rotation angle. This type of architecture is depicted in figure 1.

However, as previously stated, this type of structure has a limited scale factor and spurious modes arise close to drive and sense frequencies. Hence, the reported noise performances, directly related to the sensitivity, are at least one order of magnitude worse than yaw gyroscopes built in the same technologies.

Therefore, a general objective of the present invention is to improve the sensitivity of piezoelectric sensing pitch or roll gyroscope.

SUMMARY

To at least one of these ends, it is provided an inertial sensor comprising a substrate which defines a device plane extending along a rotation direction and a drive excitation direction normal to the rotation direction, a first drive frame, a second drive frame, an excitation device for exciting the first and the second drive frames in the drive excitation direction, a first proof mass hingedly connected to the first drive frame along a first connection axis directed along the rotation direction, a second proof mass hingedly connected to the second drive frame along a second connection axis directed along the rotation direction, a lever pivotably mounted around a fulcrum axis directed along the rotation direction, at least one strain gauge mechanically stressed by the lever when said lever is rotating around the fulcrum axis. The first proof mass is rotationally connected to the lever along a first coupling axis directed along the rotation direction, the second proof mass is rotationally connected to the lever along a second coupling axis directed along the rotation direction, the first connection axis is further away from the fulcrum axis than the first coupling axis, and the second connection axis is further away from the fulcrum axis than the second coupling axis.

This structure makes it possible to reach a better sensibility than state-of-the-art gyroscopes. It also reduces the number of arising spurious modes as compared to the known prior art.

Another aspect of the invention relates to a detection system including a plurality of such sensors.

BRIEF DESCRIPTION OF THE FIGURES

The foregoing and other aspects of the embodiments of this invention are made more evident in the following Detailed Description, when read in conjunction with the attached Drawing Figures, wherein:

Figure 1 depicts a typical sense mode with a central connection between the proof masses and the drive frames.
Figure 2 depicts the sense mode with an external connection between the proof masses and the drive frames, as claimed in the present patent application.
Figure 3 depicts an example of a pitch structure with the proposed lever system.
Figure 4 depicts the lever system.
Figure 5 depicts the pitch structure when the proof masses and the lever tilt under the effect of the Coriolis acceleration.
Figure 6 is a zoom in on the lever and the sensing system when the proof masses and the lever tilt under the effect of the Coriolis acceleration.
Figure 7 is a cross section view of the sensor and more specifically of the connection of the strain gauges to the lever and to the sensing system.

The figures are given as example and are not restrictive to the invention. They are guideline schematic representations designed to facilitate the understanding of the invention and they are not necessarily at the scale of practical implementations.

DETAILED DESCRIPTION

According to an embodiment, the distance between the first connection axis and the first coupling axis is longer, preferably twice longer, than the distance between the first coupling axis and the fulcrum axis, and the distance between the second connection axis and the second coupling axis is longer, preferably twice longer, than the distance between the second coupling axis and the fulcrum axis. This results in a better sensitivity.

According to an embodiment, the lever is symmetrical about the fulcrum axis and the first proof mass and the second proof mass are symmetrical to each other about the fulcrum axis.

According to an embodiment, the lever is shorter than 200 μm in the excitation direction.

According to an embodiment, the lever is a recessed frame, thus forming an opening, this opening housing a fixed sensing system to which the strain gauges are connected.

According to an embodiment, the lever has a rectangular layout in the device plane.

According to an embodiment, the fixed sensing system comprises at least one connection zone configured to electronically connect the at least one strain gauge.

According to an embodiment, the at least one strain gauge is directed along the direction and is connected to both the fixed sensing system and the lever.

According to an embodiment, the lever is held by torsion blades directed along the fulcrum axis, said torsion blades being fixed to anchor points.

According to an embodiment, the lever has one or more decoupling elements which can vary in number, position and type.

According to an embodiment, the sensor comprises quadrature compensation electrodes.

A second object of the present invention is a detection system comprising a plurality of sensors according to any of the preceding embodiments.

According to an embodiment, at least two sensors of the detection system have perpendicular rotation directions.

Unless otherwise indicated in the context of the present application, the terms "thickness" and "depth" refer to dimensions oriented along the thickness of the substrate.

Terms like "on", "underlying", "positioned on", or "above" or the equivalents thereof do not necessarily mean a direct contact, but, a priori, any position where staking is effective. This includes the presence of interlayers between the superimposed parts.

The following detailed description of the invention refers to the accompanying drawings. While the description includes exemplary embodiments, other embodiments are possible, and changes may be made to the embodiments described without departing from the spirit and scope of the invention.

Some advantageous features will be described below. Then some exemplary embodiments and use cases will be further detailed in regard with the drawings.

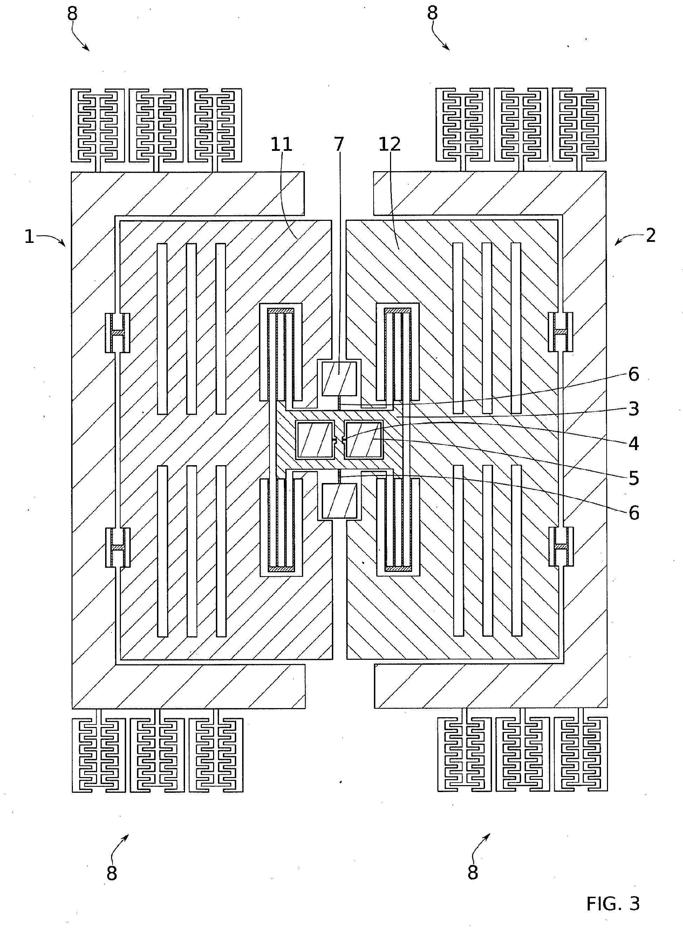

Figure 2 shows a schematic side view and figure 3 a top view of an inertial sensor according to the present invention. This sensor shall now be described.

A substrate defines a device plane extending along a rotation direction and a drive excitation direction normal to the rotation direction.

The sensor comprises a first drive frame 1 and a second drive frame 2 intended to be actuated in the excitation direction. The first and second drive frames 1, 2, once set in an anti-phase motion, drag two proof masses, called first proof mass 11 and second proof mass 12, which are sensitive to the Coriolis acceleration.

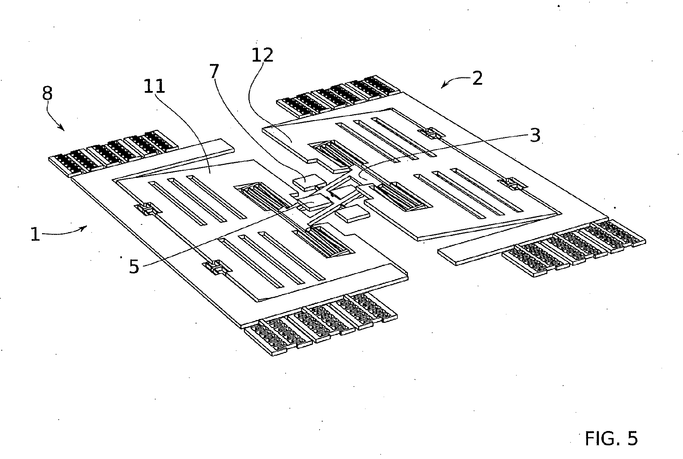

The first and second drive frames 1, 2 can be put in motion via push-pull comb finger electrodes 8 in an anti-phase motion, as represented in figures 3 and 5.

Comb finger electrodes 8 actuators are common knowledge in microelectronics. It makes use of tangential electrostatic forces for driving. Such actuators are actually consisting in comb-finger stators and comb-finger rotors.

A lever 3 is pivotably mounted around a fulcrum axis 100 directed along the rotation direction.

The first proof mass 11 and the second proof mass 12 are hingedly connected, preferably through springs, to the first drive frame 1 and to the second drive frame 2, respectively. They are also both rotationally connected to the lever 3, preferably through a type of connection that highly transmit the out-of-plane displacement, like torsion blades. These types of connection make it possible for the first proof mass 11 and the second proof mass 12 to be sensitive to the Coriolis acceleration occurring in a direction perpendicular to both the rotation direction and the excitation direction, this direction being referred as detection direction.

The first proof mass 11 is connected to the first drive frame 1 along a first connection axis 111 directed along the rotation direction, while the second proof mass 12 is hingedly connected to the second drive frame 2 along a second connection axis 112 also directed along the rotation direction. The first proof mass 11 is connected to the lever 3 along a first coupling axis 121 directed along the rotation direction, while the second proof mass 12 is hingedly connected to the drive frame 1 along a second coupling axis 122 also directed along the rotation direction.

Preferably, the fulcrum axis 100 is a symmetry axis for the lever 3 and the proof masses. In this example, the first proof mass 11 and the second proof mass 12 are on opposite sides of the fulcrum axis 100.

Furthermore, and as opposed to prior gyroscope structures like the one depicted in figure 1, the first connection axis 111 is further away from the fulcrum axis 100 than the first coupling axis 121, and the second connection axis 112 is further away from the fulcrum axis 100 than the second coupling axis 122.

This structure enables the ratio of the lever tilting angle $\theta_{lever}$ to the mass tilting angle $\theta_{mass}$ to run from 0 to infinity while in previous pitch or roll gyroscopes, the same ratio ran from 0 to 1 (excluded) only. In other words, while in previous pitch or roll gyroscopes, the lever tilting angle and the mass tilting angle were very similar, as illustrated in figure 1, in this architecture the lever tilting angle is significantly larger than the mass tilting angle.

In a pitch or roll gyroscope, whether according to previous architectures or according to the present invention, the lever tilting angle and the mass tilting angle are related according to the following formula:

$$\theta_{lever} = \frac{L_{mass}}{L_{lever}} \cdot \theta_{mass}$$

where $L_{lever}$ is the distance between the fulcrum axis 100 and the first coupling axis 121 or the second coupling axis 122 and $L_{mass}$ is the distance between the first coupling axis 121 and the first connection axis 111 or the second coupling axis 122 and the second connection axis 112. The constraints on $L_{lever}$ and $L_{mass}$ are different in the case of the structure according to the present invention than in previous architectures. This change in the constraints enables to get a higher ratio $L_{mass}/L_{lever}$ and to reach higher sensitivity levels.

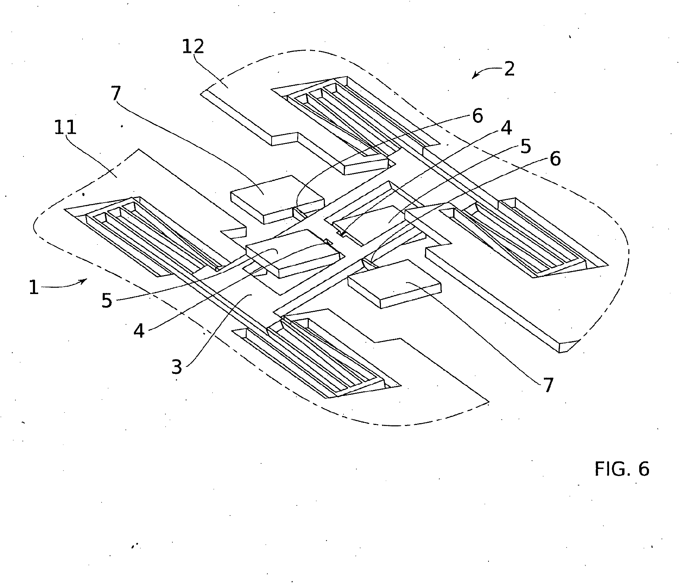

The sensor according to the invention also comprises at least one strain gauge 4 which is stressed by the lever 3 when said lever 3 is rotating around the fulcrum axis 100, as shown in figures 5 and 6. The at least one strain gauge 4 can be for example a piezoelectric gauge, a piezoresistive gauge or a resonating beam.

The relative resistance variation caused by a stress applied to the at least one strain gauge 4 can be expressed as:

$$\frac{\Delta R}{R} = GF \cdot \frac{\sigma}{E} = GF \cdot \frac{\Delta L}{L_{gauge}} = GF \cdot \frac{1}{L_{gauge}} \cdot \frac{h}{2} \cdot \frac{L_{mass}}{L_{lever}} \cdot \theta_{mass}$$

where GF is the strain gauge 4 factor, E is the Young modulus of the strain gauge 4, $\Delta L$ is the elongation of the strain gauge 4, $\sigma$ is the axial stress applied on the strain gauge 4, $L_{gauge}$ is the strain gauge 4 length and h is the process thickness.

The mass tilting angle being directly related to the external rate, the output signal can be increased by acting on the ratio $L_{mass}/L_{lever}$.

To this extent, the structure according to the present invention enables an improvement in the sensibility when $L_{mass}$ and $L_{ever}$ are wisely chosen. Indeed, a compromise has to be made when dimensioning the structure. For example, the higher the ratio $L_{mass}/L_{lever}$, the higher the output signal. To this extent, the present invention makes it possible to reach higher sensitivity levels as it allows shorter leverages. However, $L_{lever}$ shouldn't be too short as under below a certain length, the lever gets too rigid and the sensitivity level doesn't improve anymore. In other words, the present invention provides greater flexibility in dimensioning the leverage, resulting in high-performance gyroscopes.

Figure 5 illustrates how the first drive frame 1, the second drive frames 2, the lever 3, the first proof mass 11 and the second proof mass 12 are articulated to each other. Under the effect of the Coriolis acceleration and the effect of the first drive frame 1 and the second drive frame 2 being in an anti-phase motion, the first proof mass 11 and the second proof mass 12 tilt in opposite angular directions. As a result, and according to the direction of the Coriolis acceleration, the lever 3 tilts in one angular direction or the other.

According to an embodiment, the distance between the first connection axis 111 and the first coupling axis 121 is longer, preferably at least twice longer, than the distance between the first coupling axis 121 and the fulcrum axis 100, and the distance between the second connection axis 112 and the second coupling axis 122 is longer, preferably at least twice longer, than the distance between the second coupling axis 122 and the fulcrum axis 100. This results in a higher lever tilting angle for the same external stimulation, hence allowing a better sensitivity.

According to an embodiment, the lever 3 is shorter than 200 μm in the excitation direction.

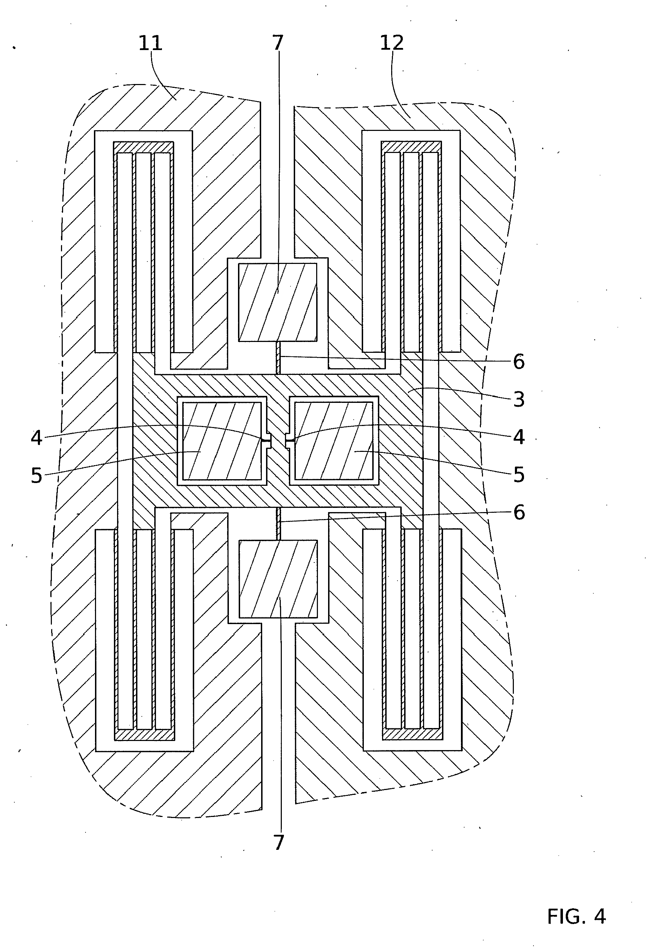

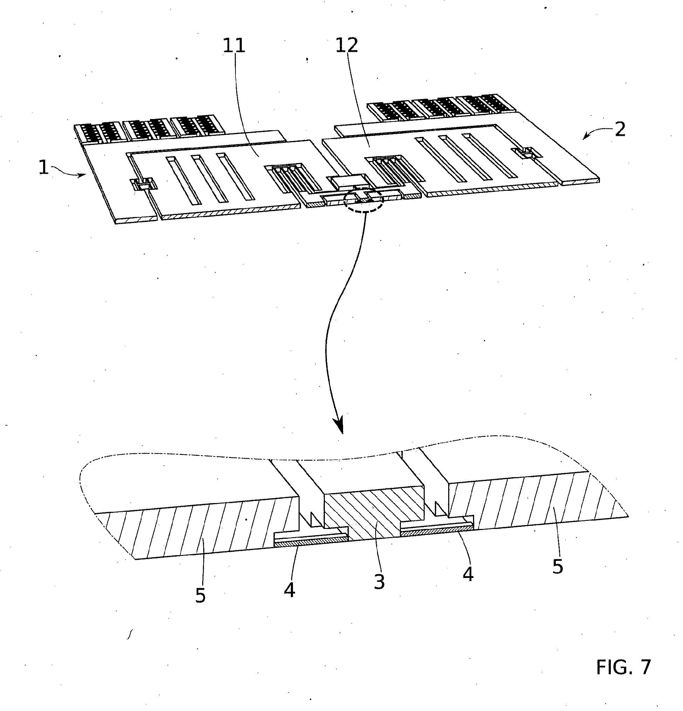

According to an embodiment, the lever 3 is a recessed frame and the opening of said recessed frame houses a fixed sensing system 5 to which the at least one strain gauge 4 is connected. Such an architecture saves space as the sensing system 5 is nestled in the lever 3 when said lever 3 is extending in the rotation direction and in the drive excitation direction. This embodiment is depicted in figures 3 to 5. Figure 5 and 6 in particular show how the lever 3 as a recessed frame tilts around the fixed sensing system 5. Preferably, the at least one strain gauge 4 is directed along the drive excitation direction and is connected to both the fixed sensing system 5 and the lever 3. For example, as depicted in figures 5 and 6, the at least one strain gauge 4 is connected at one end to a center part of the lever 3 extending along the fulcrum axis 100 and at the other end to the sensing system 5. Preferably, according to an example depicted in figure 7, the at least one strain gauge 4 is connected to the lever 3 and to the sensing system 5 respectively at the bottom of said lever 3 and at the bottom of said sensing system 5, i.e. at the bottom of the MEMS layer. This results in the at least one strain gauge 4 being stretched or compressed when the lever 3 tilts around its central part and hence around the fulcrum axis 100, as depicted in figures 5 and 6. The lever 3 and/or the sensing system 5 can have a recess welcoming the connection with the strain gauge 4, as depicted in figure 7.

According to an embodiment, the lever 3 has a rectangular layout in the device plane. Preferably, the main direction of said lever 3 extends in the drive excitation direction. This particular shape allows a better stiffness and strength of the structure, especially in the rotation direction. The high stiffness of the lever frame is well suited for structures resonating above 50 kHz without decreasing the performances due to bending or deformations. This makes it possible to conceive structures even more robust to external vibration and shocks.

According to an embodiment, the fixed sensing system 5 comprises at least one connection zone configured to electronically connect the at least one strain gauge 4.

According to an embodiment, the lever 3 is held by torsion blades 6 directed along the fulcrum axis 100, said torsion blades 6 being fixed to anchor points 7. The anchor points are grounded in the substrate. These anchor points 7 and torsion blades 6 enable the lever 3 to rotate around a fixed axis, the fulcrum axis 100, which stays parallel to the plane of the first and second drive frames 1, 2, thus ensuring an accurate measurement.

Another aspect of the invention relates to a detection system comprising a plurality of sensors according to any embodiment previously described.

According to an embodiment, the detection system comprises at least two sensors whose detection axes are perpendicular. This positioning makes it possible to monitor the acceleration in two perpendicular directions simultaneously, hence forming a pitch and roll gyroscope, commonly referred as XY gyroscope. From the above description, it is clear that the proposed solution achieves greater sensitivity than prior art devices due to the increased lever tilting angle and to the stiffness of the lever, and makes it possible to reject spurious modes which, with the present invention, fall at very large frequencies. Quantitatively, considering a stress of 130 MPa in the at least one strain gauge at the full-scale-range (1000 dps - degree per second - on a device with 400 Hz of mode split), the achievable increase in the scale-factor can be as large as 3- to 5-fold. This increase brings the sensitivity of pitch/roll devices close to the one of high-performance yaw devices, enabling a 2-axis or 3-axis planar high-performance gyroscope in very compact dimensions.

**Claims**

1. An inertial sensor comprising:

   - a substrate which defines a device plane extending along a rotation direction and a drive excitation direction normal to the rotation direction,
   - a first drive frame (1)
   - a second drive frame (2),
   - an excitation device for exciting the first and the second drive frames (1,2) in the drive excitation direction,
   - a first proof mass (11) hingedly connected to the first drive frame (1) along a first connection axis (111) directed along the rotation direction,
   - a second proof mass (12) hingedly connected to the second drive frame (2) along a second connection axis (112) directed along the rotation direction,
   - a lever (3) pivotably mounted around a fulcrum axis (100) directed along the rotation direction,
   - at least one strain gauge (4) mechanically stressed by the lever (3) when said lever (3) is rotating around the fulcrum axis (100),

   wherein:

   - the first proof mass (11) is rotationally connected to the lever (3) along a first coupling axis (121) directed along the rotation direction,
   - the second proof mass (12) is rotationally connected to the lever (3) along a second coupling axis (122) directed along the rotation direction,
   - the first connection axis (111) is further away from the fulcrum axis (100) than the first coupling axis (121),
   - the second connection axis (112) is further away from the fulcrum axis (100) than the second coupling axis (122).

2. The sensor according to claim 1, wherein the distance between the first connection axis (111) and the first coupling axis (121) is longer than the distance between the first coupling axis (121) and the fulcrum axis (100), and the distance between the second connection axis (112) and the second coupling axis (122) is longer than the distance between the second coupling axis (122) and the fulcrum axis (100).

3. The sensor according to any of the preceding claims, wherein the lever (3) is symmetrical about the fulcrum axis (100) and the first proof mass (11) and the second proof mass (12) are symmetrical to each other about the fulcrum axis (100).

4. The sensor according to any of the preceding claims, wherein the lever (2) is shorter than 200 $\mu$m in the excitation direction.

5. The sensor according to any of the preceding claims, wherein the lever (3) is a recessed frame, thus forming an opening, this opening housing a fixed sensing system (5) to which the at least one strain gauge (4) is connected.

6. The sensor according to the preceding claim, wherein the lever (3) has a rectangular layout in the device plane.

7. The sensor according to any of the two preceding claims, wherein the fixed sensing system (5) comprises at least one connection zone configured to electronically connect the at least one strain gauge (4).

8. The sensor according to the previous claim, wherein the at least one strain gauge (4) is directed along the rotation direction and is connected to both the fixed sensing system (5) and the lever (3).

9. The sensor according to any of the preceding claims, wherein the lever (3) is held by torsion blades (6) directed along the fulcrum axis (100), said torsion blades being fixed to anchor points (7).

10. The sensor according to any of the preceding claims, comprising quadrature compensation electrodes.

11. The sensor according to any of the preceding claims, wherein the at least one strain gauge (4) is a piezoelectric gauge.

12. A detection system comprising a plurality of sensors according to any of the preceding claims.

13. The detection system according to the previous claim, wherein at least two sensors have perpendicular rotation directions.

1 121 11 111 100 3 112 12 122 2

FIG. 1

1 111 11 121 100 3 122 12 112 2

FIG. 2

FIG. 3

FIG. 4

FIG. 5

FIG. 6

FIG. 7

Europäisches
Patentamt

European
Patent Office

Office européen
des brevets

**EUROPEAN SEARCH REPORT**

Application Number

EP 22 31 5077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/281977 A1 (CORONATO LUCA [IT] ET AL) 11 November 2010 (2010-11-11) * paragraphs [0055], [0062] - [0065]; claim 12; figures 7a, 7b * | 1-13 | INV. G01C19/5712 G01C19/5747 |
| Y,D | DELLEA STEFANO ET AL: "In-Plane and Out-of-Plane MEMS Gyroscopes Based on Piezoresistive NEMS Detection", JOURNAL OF MICROELECTROMECHANICAL SYSTEMS, IEEE SERVICE CENTER, US, vol. 24, no. 6, 1 December 2015 (2015-12-01), pages 1817-1826, XP011592522, ISSN: 1057-7157, DOI: 10.1109/JMEMS.2015.2441142 [retrieved on 2015-11-25] * page 1818; figures 2(a), 2(b), 3(a) * | 1-13 | |

TECHNICAL FIELDS SEARCHED (IPC)

G01C

The present search report has been drawn up for all claims

| Place of search | Date of completion of the search | Examiner |
|---|---|---|
| The Hague | 2 September 2022 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5077

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | | Publication date | Patent family member(s) | | Publication date |
|---|---|---|---|---|---|
| US 2010281977 | A1 | 11-11-2010 | IT | 1394007 B1 | 17-05-2012 |
| | | | US | 2010281977 A1 | 11-11-2010 |
| | | | US | 2013019677 A1 | 24-01-2013 |
| | | | US | 2014116136 A1 | 01-05-2014 |
| | | | US | 2017059322 A1 | 02-03-2017 |
| | | | US | 2017322028 A1 | 09-11-2017 |
| | | | US | 2019162540 A1 | 30-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANO DELLEA ; FEDERICO GIACCI ; ANTONIO FRANCESCO LONGONI ; GIACOMO LANGFELDER.** In-Plane and Out-of-Plane MEMS Gyroscopes Based on Piezoresistive NEMS Detection. *JOURNAL OF MICROELECTROMECHANICAL SYSTEMS,* December 2015, vol. 24 (6